# EUROPÄISCHE PATENTANMELDUNG

(11) **EP 1 992 850 A1**
(43) Veröffentlichungstag der Anmeldung: **19.11.2008**
(21) Anmeldenummer: 07009951.0
(22) Anmeldetag: 18.05.2007
(51) Int. Cl.: F16J 15/32

(54) **Bürstendichtung**

(71) Anmelder: SIEMENS AKTIENGESELLSCHAFT, 80333 München (DE)
(72) Erfinder: Annen, Michael, 47259 Duisburg (DE); Hannott, Kerstin, 45473 Mülheim (DE); Nonaka, Kazuya, 216-0003 Kawasaki-shi (JP); Schmahl, Milan, 45479 Mülheim an der Ruhr (DE)

(57) **Zusammenfassung**

Bürstendichtung zum Abdichten eines Spalts (1) zwischen zwei relativ zueinander beweglichen Bauteilen (2,3), mit einer Vielzahl von flexiblen Borsten (4), die über eine Halterung (5) an dem ersten Bauteil (2) befestigt sind und sich in Richtung der Oberfläche des zweiten Bauteils (3) erstrecken,
wobei sie den Spalt (1) abdichtend überbrücken,
Die Erfindung besteht darin, dass
Die Borsten (4) derart an dem ersten Bauteil (2) befestigt sind, dass sie spaltseitig mit der Oberfläche des zweiten Bauteils (3) einen spitzen Winkel einschließen.

## Beschreibung

Die Erfindung betrifft eine Bürstendichtung zum Abdichten eines Spalts zwischen zwei relativ zueinander beweglichen Bauteilen, die über eine Halterung an dem ersten Bauteil befestigt sind und sich in Richtung der Oberfläche des zweiten Bauteils erstrecken, wobei sie den Spalt abdichtend überbrücken.

In der DE 101 63 804 B4 ist eine derartige Bürstendichtung beschrieben. Sie ist dafür vorgesehen, einen Spalt zwischen zwei relativ zueinander beweglichen Bauteilen abzudichten. Die Bürstendichtung weist eine Vielzahl von flexiblen Borsten auf, die über eine Halterung an dem ersten Bauteil befestigt sind. Die Borsten überbrücken den Spalt zwischen den beiden Bauteilen und die freien Enden der Borsten liegen an einer Oberfläche des zweiten Bauteils an. Dabei schließen die Borsten mit der Dichtungsfläche des zweiten Bauteils einen Winkel im Bereich von 90° ein.

Bei der bekannten Bürstendichtung wird als nachteilig angesehen, dass sie bezüglich einer Änderung der abzudichtenden Spaltweite wenig flexibel sind. Insbesondere können bei einer Verringerung der Spaltweite hohe Belastungen der Borsten in der Halterung auftreten, was zu einem schnellen Verschleiß der Bürstendichtung führen kann. Außerdem kann bei den nahezu senkrecht zu der Oberfläche des zweiten Bauteils ausgerichteten Borsten ein relativ hoher Verschleiß durch Abrieb auftreten.

Es ist daher Aufgabe der vorliegenden Erfindung, eine Bürstendichtung der eingangs genannten Art bereitzustellen, die dazu in der Lage ist, auch bei deutlichen Änderungen der Spaltweite den Spalt weiterhin zuverlässig abzudichten, wobei gleichzeitig die Langzeitstabilität der Bürstendichtung verbessert ist.

Gemäß einem ersten Aspekt der Erfindung wird diese Aufgabe dadurch gelöst, dass die Borsten derart an dem ersten Bauteil befestigt sind, dass sie spaltseitig mit der Oberfläche des zweiten Bauteils einen spitzen Winkel einschließen. Diese Anordnung beinhaltet eine höhere Dichtungsflexibilität bei deutlichen Änderungen der Spaltweite.

Die Bürstendichtung kann auch so ausgebildet sein, dass die Borsten bereichsweise an der Oberfläche des zweiten Bauteils anliegen. Dabei können die Borsten durch den Kontakt mit der Oberfläche des zweiten Bauteils eine (elastische) Vorspannung erfahren. Vorteilhaft gegenüber den Bürstendichtungen des Standes der Technik sind hierbei einerseits die reduzierte Belastung der Borsten und der Halterung und andererseits die verbesserten Gleiteigenschaften der Borsten auf der Oberfläche des zweiten Bauteils auch im Falle einer lateralen Verschiebung der beiden Bauteile.

Gemäß einer Ausführungsform des ersten Aspektes der Erfindung ist vorgesehen, dass die Borsten an dem ersten Bauteil derart befestigt sind, dass sie mit der Oberfläche des zweiten Bauteils spaltseitig einen Winkel zwischen 20° bis 80°, besonders von 30° bis 60° und insbesondere von 45° einschließen.

Gemäß einer weiteren Ausführungsform ist vorgesehen, dass die Borsten von der Oberfläche des zweiten Bauteils weggebogen sind. So ist eine plastische Vorbiegung der Borsten denkbar, bei der die Biegerichtung von der Oberfläche des zweiten Bauteils weg weist.

Zur zusätzlichen Erhöhung der Dichtungsflexibilität können die Borsten beider oben genannter Ausführungsformen darüber hinaus eine Abwinklung innerhalb der Borstenpackung aufweisen (größer 10° und kleiner 90° zur Halterung).

Es ist ebenfalls möglich, dass die Bürstendichtung flexible Lamellen aufweist, die gemeinsam mit den Borsten über die Halterung an dem ersten Bauteil befestigt sind und diese bereichsweise überdecken. Hierdurch werden eine partielle Stabilisierung der Borsten sowie eine erhöhte Dichtwirkung erreicht.

Eine Weiterbildung des ersten Aspekts der Erfindung sieht vor, dass die Halterung direkt am Spalt angeordnet ist.

Die Bürstendichtung kann beispielsweise verwendet werden, um einen Spalt zwischen heißgasführenden Bauteilen einer Gasturbine abzudichten. Bei überlappenden und somit potentiell verschleißanfälligen Bauteilen ermöglicht die Applikation derartiger Bürstendichtungen eine Spaltvergrößerung bei gleichzeitig erhöhter Bauteillebensdauer und optimierter Dichtwirkung. Dies führt zu einer Erhöhung der Wirtschaftlichkeit der entsprechenden Anlage.

Gemäß einem zweiten Aspekt der Erfindung wird die Aufgabe dadurch gelöst, dass die Borsten ausgehend von der Halterung in einem ersten Abschnitt derart von der Oberfläche des ersten Bauteils weggebogen sind, dass der erste Abschnitt der Borsten mit der Oberfläche des ersten Bauteils einen spitzen Winkel einschließt, und in einem zweiten Abschnitt, der sich an den ersten Abschnitt anschließt, derart in Richtung der Oberfläche des zweiten Bauteils gebogen sind, dass die Borsten spaltseitig einen Winkel von mehr als 45° und weniger als 90° mit der Oberfläche des zweiten Bauteils einschließen.

Hierbei ist vorteilhaft, dass die Borsten eine besonders hohe Flexibilität gegenüber Änderungen der Spaltweite aufweisen.

Die Bürstendichtung kann derart ausgebildet sein, dass die Borsten bereichsweise an der Oberfläche des zweiten Bauteils anliegen und dabei eine elastische Vorspannung erfahren. Des Weiteren ist ebenfalls eine plastische Vorbiegung der Borstenpackung denkbar.

Gemäß einer Ausführungsform dieses Aspektes der Erfindung ist vorgesehen, dass die Borsten in dem zweiten Abschnitt derart in Richtung der Oberfläche des zweiten Bauteils gebogen sind, dass die Borsten spaltseitig einen Winkel von 70° bis 85° mit der Oberfläche des zweiten Bauteils einschließen.

Gemäß einer weiteren Ausführungsform dieses Aspektes der Erfindung ist vorgesehen, dass die Borsten in einem dritten Abschnitt, der sich an den zweiten Abschnitt anschließt, von der Oberfläche des zweiten Bauteils weggebogen sind. In diesem Fall weisen die Borsten erheblich verbesserte Gleiteigenschaften auf der Oberfläche des korrespondierenden Bauteils auf, womit diese Form der Bürstendichtung auch bei lateralen Verschiebungen der beiden Gehäuseteile eine erhöhte Verschleißresistenz bietet.

Der dritte Bereich der Borsten kann mit der Oberfläche des zweiten Bauteils einen Winkel zwischen 20° und 80°, insbesondere von 30° bis 60° einschließen.

Eine andere Ausgestaltung dieses Aspektes der Erfindung sieht vor, dass die Halterung derart an der vom Spalt wegweisenden Oberfläche des ersten Bauteils angebracht ist, dass der erste Abschnitt der Borsten beabstandet zu der Oberfläche des ersten Bauteils liegt.

Die Bürstendichtung kann auch flexible, insbesondere geschachtelte Lamellen aufweisen, die gemeinsam mit den Borsten über die Halterung befestigt sind, wobei die Lamellen die Borsten bereichsweise überdecken.

Weiterhin können die Borsten der Bürstendichtung auch über die Halterung an einem ersten heißgasführenden Bauteil einer Gasturbine befestigt sein und den Spalt zwischen dem ersten heißgasführenden Bauteil und einem zweiten heißgasführenden Bauteil abdichtend überbrücken.

Die Erfindung wird im Folgenden anhand von drei Ausführungsbeispielen unter Bezugnahme auf die Zeichnung näher erläutert.

In der Zeichnung zeigen:
- Figur 1: eine schematische Darstellung einer Ausführungsform des ersten Aspektes der Erfindung;
- Figur 2: eine schematische Darstellung einer ersten Ausführungsform des zweiten Aspektes der Erfindung; und
- Figur 3: eine schematische Darstellung einer zweiten Ausführungsform des zweiten Aspektes der Erfindung.

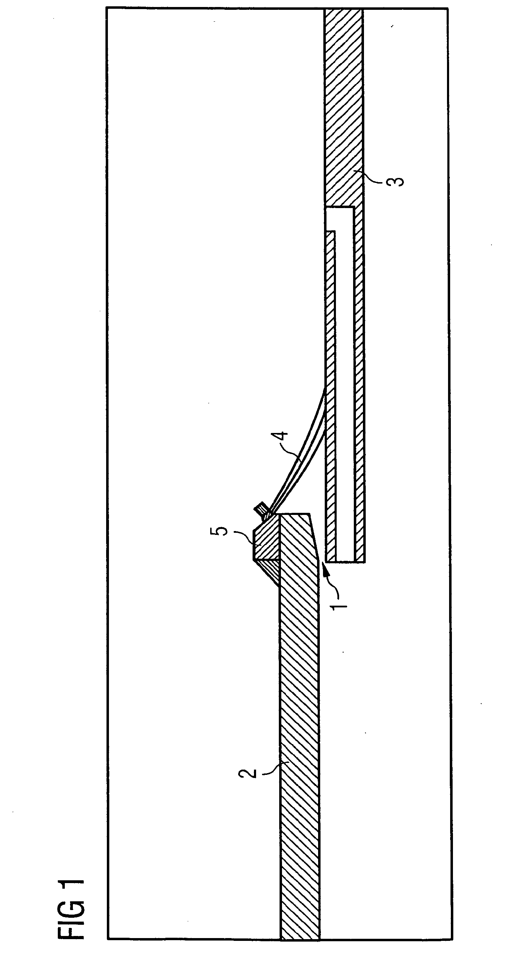

In der Figur 1 ist schematisch eine Bürstendichtung gemäß des ersten Aspektes der Erfindung dargestellt. Die Bürstendichtung ist dafür vorgesehen, einen Spalt 1 zwischen zwei relativ zueinander beweglichen Bauteilen 2 und 3 abzudichten. Bei den Bauteilen 2 und 3 kann es sich beispielsweise um heißgasführende Bauteile einer Gasturbine handeln.

Die Bürstendichtung umfasst eine Vielzahl von flexiblen Borsten 4, die über eine Halterung 5 an dem ersten Bauteil 2 befestigt sind. Dabei ist die Halterung 5 unmittelbar an dem Spalt 1 angeordnet und so ausgebildet, dass die von ihr am ersten Bauteil 2 befestigten Borsten 4 in Richtung der Oberfläche des zweiten Bauteils 3 orientiert sind. Die Borsten 4 sind weiterhin von der Oberfläche des zweiten Bauteils 3 weggebogen und liegen mit ihren freien Enden an der Oberfläche des zweiten Bauteils 3 an, wobei sie elastisch vorgespannt sind. Auf diese Weise überbrücken die Borsten 4 den Spalt 1 und dichten diesen ab.

Ein besonderer Vorteil dieser erfindungsgemäßen Bürstendichtung ist, dass sich die Borsten 4 flexibel an Änderungen der Weite des Spaltes 1 anpassen können.

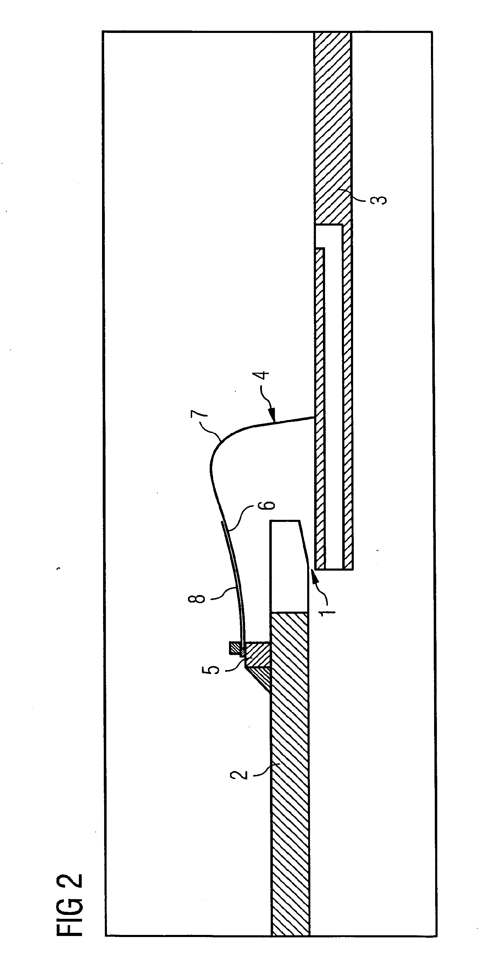

Die Figur 2 zeigt eine erste Ausführungsform einer Bürstendichtung gemäß des zweiten Aspektes der Erfindung. In der Figur sind Bauteile, die mit Bauteilen der Ausführungsform der Figur 1 identisch sind, mit denselben Bezugsziffern versehen. Die Bürstendichtung der Figur 2 weist Borsten 4 auf, die ausgehend von der Halterung 5 in einem ersten Abschnitt 6 derart von der Oberfläche des ersten Bauteils 2 weggebogen sind, dass der erste Abschnitt 6 der Borsten 4 mit der Oberfläche des ersten Bauteils 2 einen spitzen Winkel einschließt. Dabei ist die Halterung 5 so an der vom Spalt 1 wegweisenden Oberfläche des ersten Bauteils 2 angebracht, dass der erste Abschnitt 6 der Borsten 4 beabstandet zu der Oberfläche des ersten Bauteils 2 liegt.

An den ersten Abschnitt 6 der Borsten 4 schließt sich ein zweiter Abschnitt 7 an, der in Richtung der Oberfläche des zweiten Bauteils 3 gebogen ist. Die freien Enden der Borsten 4 liegen an der Oberfläche des zweiten Bauteils 3 an, so dass die Borsten 4 mit der Oberfläche des zweiten Bauteils einen Winkel von mehr als 45° und weniger als 90° einschließen.

Die Bürstendichtung weist zusätzlich flexible Lamellen 8 auf, die gemeinsam mit den Borsten 4 über die Halterung 5 an dem Bauteil 2 befestigt sind. Die Lamellen 8 überdecken die Borsten 4 bereichsweise.

Die Bürstendichtung der Figur 2 zeichnet sich durch eine besonders hohe Flexibilität gegenüber Änderungen der Weite des Spaltes 1 aus. Außerdem sorgen die flexiblen Lamellen 8 dafür, dass die Borsten bei gleichzeitiger Erhöhung der Dichtwirkung stabilisiert werden.

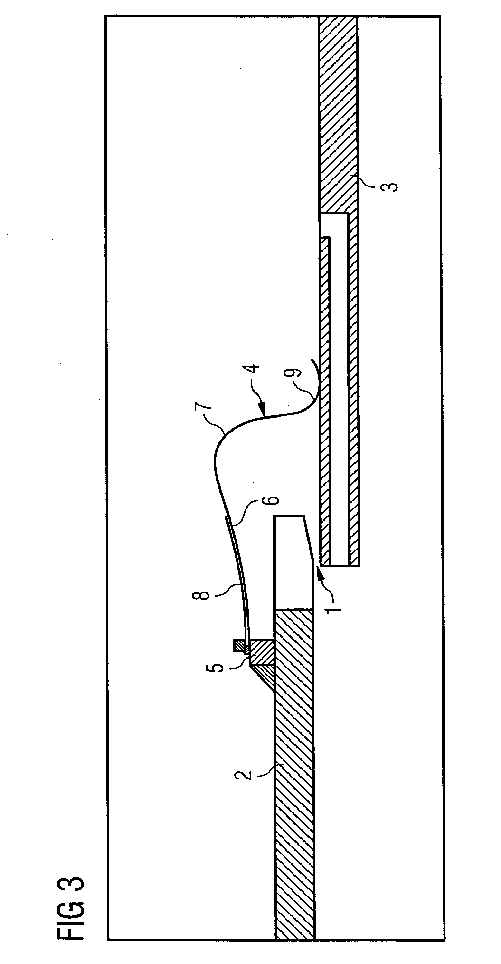

In der Figur 3 ist eine zweite Ausführungsform des zweiten Aspekts der Erfindung schematisch dargestellt. Diese stimmt im Wesentlichen mit der Ausführungsform der Figur 2 überein. Im Unterschied zu der Bürstendichtung der Figur 2 weisen hier die Borsten 4 einen dritten Abschnitt 9 auf, der sich an den zweiten Abschnitt 7 anschließt. Dieser dritte Abschnitt 9 ist von der Oberfläche des zweiten Bauteils 3 weggebogen. Auf diese Weise werden erheblich verbesserte Gleiteigenschaften der Borstenpackung auf dem korrespondierenden Bauteil realisiert.

## Patentansprüche

1. Bürstendichtung zum Abdichten eines Spalts (1) zwischen zwei relativ zueinander beweglichen Bauteilen (2, 3), mit einer Vielzahl von flexiblen Borsten (4), die über eine Halterung (5) an dem ersten Bauteil (2) befestigt sind und sich in Richtung der Oberfläche des zweiten Bauteils (3) erstrecken,
wobei sie den Spalt (1) abdichtend überbrücken,
**dadurch gekennzeichnet, dass**
die Borsten (4) derart an dem ersten Bauteil (2) befestigt sind, dass sie spaltseitig mit der Oberfläche des zweiten Bauteils (3) einen spitzen Winkel einschließen.

2. Bürstendichtung nach Anspruch 1,
**dadurch gekennzeichnet, dass**
die Borsten (4) bereichsweise an der Oberfläche des zweiten Bauteils (3) anliegen.

3. Bürstendichtung nach Anspruch 1 oder 2,
**dadurch gekennzeichnet, dass**
die Borsten (4) an dem ersten Bauteil (2) derart befestigt sind, dass sie mit der Oberfläche des zweiten Bauteils (3) spaltseitig einen Winkel von 20° bis 80°, besonders von 30° bis 60° und
insbesondere von etwa 45° einschließen.

4. Bürstendichtung nach einem der vorhergehenden Ansprüche,
**dadurch gekennzeichnet, dass**
die Borsten (4) von der Oberfläche des zweiten Bauteils (3) weggebogen sind.

5. Bürstendichtung nach einem der vorhergehenden Ansprüche,
**dadurch gekennzeichnet, dass**
sie flexible, insbesondere geschachtelte Lamellen aufweist, die gemeinsam mit den Borsten (4) über die Halterung (5) an dem ersten Bauteil (2) befestigt sind und die Borsten (4) bereichsweise überdecken.

6. Bürstendichtung nach einem der vorhergehenden Ansprüche,
**dadurch gekennzeichnet, dass**
die Halterung (5) direkt am Spalt (1) angeordnet ist.

7. Bürstendichtung nach einem der vorhergehenden Ansprüche,
**dadurch gekennzeichnet, dass**
die Borsten (4) über die Halterung (5) an einem ersten heißgasführenden Bauteil einer Gasturbine befestigt sind und den Spalt (1) zwischen dem ersten heißgasführenden Bauteil und einem zweiten heißgasführenden Bauteil abdichtend überbrücken.

8. Bürstendichtung zum Abdichten eines Spalts (1) zwischen zwei relativ zueinander beweglich angeordneten Bauteilen (2, 3),
mit einer Vielzahl von flexiblen Borsten (4), die über eine Halterung (5) an dem ersten Bauteil (2) befestigt sind und sich in Richtung der Oberfläche des zweiten Bauteils (3) erstrecken,
wobei sie den Spalt (1) abdichtend überbrücken,
**dadurch gekennzeichnet, dass**
die Borsten (4) ausgehend von der Halterung (5) in einem ersten Abschnitt (6) derart von der Oberfläche des ersten Bauteils (2) weggebogen sind,
dass der erste Abschnitt (6) der Borsten (4) mit der Oberfläche des ersten Bauteils (2) einen spritzen Winkel einschließt und
in einem zweiten Abschnitt (7), der sich an den ersten Abschnitt (6) anschließt, derart in Richtung der Oberfläche des zweiten Bauteils (3) gebogen sind, dass die Borsten (4) spaltseitig einen Winkel von mehr als 45° und weniger als 90° mit der Oberfläche des zweiten Bauteils (3) einschließen.

9. Bürstendichtung nach Anspruch 8,
**dadurch gekennzeichnet, dass**
die Borsten (4) bereichsweise an der Oberfläche des zweiten Bauteils (3) anliegen.

10. Bürstendichtung nach Anspruch 9,
**dadurch gekennzeichnet, dass**
die Borsten (4) im Bereich ihrer freien Enden an der Oberfläche des zweiten Bauteils (3) anliegen.

11. Bürstendichtung nach einem der Ansprüche 8 bis 10,
**dadurch gekennzeichnet, dass**
die Borsten (4) in dem zweiten Abschnitt (7) derart in Richtung der Oberfläche des zweiten Bauteils (3) gebogen sind, dass die Borsten (4) spaltseitig einen Winkel von 70° bis 85° mit der Oberfläche des zweiten Bauteils (3) einschließen.

12. Bürstendichtung nach Anspruch 8 oder 9,
**dadurch gekennzeichnet, dass**
die Borsten (4) in einem dritten Abschnitt (9), der sich an den zweiten Abschnitt (7) anschließt, von der Oberfläche des zweiten Bauteils (3) weggebogen sind.

13. Bürstendichtung nach Anspruch 12,
**dadurch gekennzeichnet, dass**
der dritte Bereich (9) der Borsten (4) mit der Oberfläche des zweiten Bauteils (3) einen Winkel zwischen 20° und 80°, insbesondere von 30° bis 60° einschließt.

14. Bürstendichtung nach einem der Ansprüche 8 bis 13,
**dadurch gekennzeichnet, dass**
die Halterung (5) derart an der von dem Spalt (1) wegweisenden Oberfläche des ersten Bauteils (2) angebracht ist, dass der erste Abschnitt (6) der Borsten (4) beanstandet zu der Oberfläche des ersten Bauteils (2) liegt.

15. Bürstendichtung nach einem der Ansprüche 8 bis 14,
**dadurch gekennzeichnet, dass**
sie flexible, insbesondere geschachtelte Lamellen (8) aufweist, die gemeinsam mit den Borsten (4) über die Halterung (5) befestigt sind und die Borsten (4) bereichsweise überdecken.

16. Bürstendichtung nach einem der Ansprüche 8 bis 15,
**dadurch gekennzeichnet, dass**
die Borsten (4) über die Halterung (5) an einem ersten heißgasführenden Bauteil einer Gasturbine befestigt sind und den Spalt (1) zwischen dem ersten heißgasführenden Bauteil und einem zweiten heißgasführenden Bauteil abdichtend überbrücken.
